# EUROPÄISCHE PATENTANMELDUNG

(11) **EP 4 484 152 A1**
(43) Veröffentlichungstag der Anmeldung: **01.01.2025**
(21) Anmeldenummer: 23182476.4
(22) Anmeldetag: 29.06.2023
(51) Int. Cl.: B32B 3/30, B32B 21/06, B32B 29/00

(54) **HOLZWERKSTOFFPLATTE MIT MINDESTENS EINER IN DIE OBERSEITE EINGEPRÄGTEN VERTIEFUNG**

(71) Anmelder: Flooring Technologies Ltd., Kalkara SCM1001 (MT)
(72) Erfinder: KALWA, Norbert, 32805 Horn-Bad Meinberg (DE); SEIDACK, Georg, 16909 Wittstock/Dosse (DE)
(74) Vertreter: Gramm, Lins & Partner Patent- und Rechtsanwälte PartGmbB

(57) **Zusammenfassung**

Die Erfindung betrifft eine Holzwerkstoffplatte mit einem Kern (1), mindestens einer auf einer Oberseite (1.1) über dem Kern (1) liegenden Dekorschicht (2), unter der mindestens ein Unterlagsbogen (4) aus mit einem Harz beschichtetem Papier vorgesehen ist, mindestens einer über der Dekorschicht (2) liegenden Abdeckschicht (3) und mindestens einer in die Oberseite (1.1) eingeprägten Vertiefung (5), die dadurch gekennzeichnet ist, dass das Harz ein Mischharz aus Phenolharz und Melaminharz ist.

## Beschreibung

Die Erfindung betrifft eine Holzwerkstoffplatte mit einem Kern, mindestens einer auf einer Oberseite über dem Kern liegenden Dekorschicht, unter der mindestens ein Unterlagsbogen aus mit einem Harz beschichtetem Papier vorgesehen ist, mindestens einer über der Dekorschicht liegenden Abdeckschicht und mindestens einer in die Oberseite eingeprägten Vertiefung.

Bei modernen Laminatböden wird heute eine Vielzahl von Designeffekten eingesetzt, um das Produkt optisch aufzuwerten bzw. um noch näher an die Vorlage von Parkett bzw. Echtholzfußboden heranzureichen. Auch werden technische Veränderungen am Produkt vorgenommen, um die Nutzung über längere Zeiträume noch problemloser zu gestalten. Beispiele hierfür sind die Nutzung von Digitaldruckern zur Erzeugung von Holzreproduktionen ohne Dekorwiederholung, Verbesserung der Verbindungsprofile gegen Eindringen von Wasser oder Ausgestaltung der Elementkanten mit Fasen (Abschrägungen). Auch dieses Designelement wurde von Echtholzböden entlehnt. Es hat dabei zwei Funktionen. Zum einen wird durch die Fase das Verlegebild optisch aufgelockert, zum anderen werden maschinenbedingte Höhentoleranzen kaschiert. Allerdings wird durch die Fase auch eine Schwachstelle erzeugt, die das Eindringen von Wasser in den Verbindungsbereich der Fußbodenelemente erleichtert. Zwar kann die Fase mit Hilfe von farbigen Lacken versiegelt werden, jedoch ist diese Versiegelung meist nicht wasserfest. Das bedeutet, dass bei häufiger Einwirkung von Wasser in diesen Bereich, z.B. durch Pflege, Anquellungen auftreten können.

Um dieses Problem zu vermeiden, wurde versucht, durch tiefstrukturierte Prägebleche die Beschichtung der Holzwerkstoffträger in einer Kurztaktpresse mit Melaminimprägnaten, in dem später als Fase ausgebildeten Bereich vorzustrukturieren. Anschließend sollte dann beim Bearbeiten bzw. beim Profilieren der Seitenkanten die Fase weiter als Melaminbeschichtung vorhanden sein.

Aus der EP 3 578 383 A1 ist ein Verfahren bekannt, mit dem in eine HDF-Platte in einem ersten Prägeschritt in die Oberseite ein Relief als mindestens eine streifenförmige Vertiefung geprägt wird, auf die Oberseite werden zunächst ein Vergütungsmittel, dann ein Unterlagsbogen aus einem harzgetränkten Papier, darauf dann ein Dekorpapier und auf das Dekorpapier ein Overlaypapier als abriebfeste Schicht aufgebracht. Dieser Aufbau wird einer Presse zugeführt und unter hohem Druck und hoher Temperatur verpresst. Während des Verpressens wird in einem zweiten Prägeschritt erneut in die mindestens eine streifenförmige Vertiefung geprägt, ohne dabei die Tiefe zu verändern. Abschließend wird die verpresste HDF-Platte in einzelne Paneele aufgeteilt, indem entlang der Vertiefungen ein Sägeschnitt durchgeführt wird. Solche Paneele können als Fußbodenpaneele oder als Wand- und Deckenpaneele verwendet werden. Häufig sind sie mit einem Holz-, Stein- oder Fantasiedekor mit überlagerter, dreidimensionaler Oberfläche versehen.

Damit eine Fase gut sichtbar ist, muss die Tiefe der Vertiefung bei 0,4 bis 0,5 mm liegen. Zur Erzeugung der Vertiefung können Prägekalanderwalzen, die unter Aufbringung eines Druckes von bis zu 600 N/mm² und einer Oberflächentemperatur von bis zu 220° arbeiten, eingesetzt werden. Auch kann eine Kurztaktpresse mit einem tiefstrukturierten Pressblech mit vorzugsweise leistenförmigen Erhöhungen auf dem Presseblech verwendet werden.

Bei dem bekannten Verfahren wird zwar die Technik für das Pressen der Fase zur Verfügung gestellt, jedoch verbleiben weitere Probleme. Die Holzwerkstoffplatte, insbesondere Faserplatten, die den Kern bilden und als Trägermaterial dienen, zeigen beim Verpressen mit tiefstrukturierten Blechen einen sogenannten Spring-Back-Effekt. Das heißt, nach dem Verpressen zeigen die Holzwerkstoffplatten nicht die Strukturtiefe des Bleches, sondern nur circa 60% der geprägten Strukturtiefe. Das hängt mit der Elastizität der Holzwerkstoffplatte zusammen, die in der Kurztaktpresse komprimiert wird und nach der Druckentlastung zum Teil wieder aufgeht. Damit ist es notwendig, die Pressbleche deutlich tiefer zu strukturieren, um die gewünschte Strukturtiefe im späteren Produkt zu erzeugen.

Ein weiteres Problem besteht darin, dass in den Bereichen, in denen die tiefe Strukturierung erfolgt, die für den mindestens einen Unterlagsbogen, das Dekor und das Overlay eingesetzten Melaminharzpapiere durch das Überstrecken zum Reißen neigen. Es wurde hierzu versucht, streifenförmige Imprägnate einzusetzen, die aber nur schwer auf der Holzwerkstoffplatte zu positionieren sind. Letztendlich sind die Zielvorrichtungen an den Kurztaktpressen für das Legen von streifenförmigen Imprägnaten auch nicht ausgelegt. Die vorgelagerten Imprägnierkanäle können derartige streifenförmige Imprägnate nicht erzeugen, was zu einem zusätzlichen Arbeitsschritt nach der Imprägnierung führt.

Auch ist häufig zu beobachten, dass sich in den tiefstrukturierten Bereichen der Holzwerkstoffplatte Transparenzstörungen zeigen. Es können auch Mikrorisse in der Strukturierung festgestellt werden.

Hiervon ausgehend soll eine gattungsgemäße Holzwerkstoffplatte so verbessert werden, dass die mindestens eine eingeprägte Vertiefung möglichst tief ist und ihre Tiefe mindestens 0,4 mm beträgt, ohne die üblicherweise an einer Kurztaktpresse genutzten Pressbedingungen signifikant zu verändern oder die Vorprodukte (Imprägnate, Holzwerkstoffplatten, Faserplatten) zuvor gravierend technisch zu verändern.

Zur Problemlösung zeichnet sich eine gattungsgemäße Holzwerkzeugplatte dadurch aus, dass das Harz ein Mischharz aus Phenolharz und Melaminharz ist.

Wie sich bei den Verpressungen in überraschender Weise zeigte, führt dies zu deutlich verbesserten Ergebnissen. Gegenüber herkömmlichen geprägten Holzwerkstoffplatten ist nicht nur ein deutlich geringerer Spring-Back-Effekt zu beobachten, sondern auch die Probleme der Rissbildung und der Transparenzstörungen waren ganz deutlich reduziert bzw. tauchten gar nicht mehr auf.

Es hat sich als besonders positiv herausgestellt, wenn das Verhältnis von Phenolharz zu Melaminharz 2:1 ist.

In Versuchen wurde festgestellt, dass eine deutliche Abhängigkeit der Problembehebung von der Grammatur des Unterlagsbogens besteht. Je höhergrammig der Unterlagsbogen war, umso tiefer konnte die Struktur gebildet werden und umso geringer waren Rissbildung bzw. Transparenzstörungen zu beobachten. Deshalb beträgt das Gewicht des Papierbogens vorzugsweise 80 bis 260 g/m² und vorzugsweise erfolgt die Beschichtung (Imprägnierung) des Papiers mit dem Mischharz in einer Menge von 60 bis 200 g/m².

Wenn das Papiergewicht 80 g/m² beträgt, ist es vorteilhaft, dieses mit mindestens 60 g/m² Mischharz zu beschichten.

Wenn das Papiergewicht 100 g/m² beträgt, ist es vorteilhaft, das Papier mit mindestens 75 g/m² Mischharz zu beschichten und wenn das Papiergewicht beispielsweise 160 g/m² beträgt, ist es insbesondere vorteilhaft, wenn das Papier mit 120 g/m² Mischharz beschichtet wird.

Vorteilhaft ist es, wenn mindestens eine weitere im Winkel von 90° quer zu der Vertiefung eingeprägte Vertiefung vorgesehen ist. Entlang dieser Vertiefungen können dann Paneele aus der Holzwerkstoffplatte ausgeschnitten werden. Besonders vorteilhaft ist es, wenn eine Mehrzahl jeweils parallel zueinander verlaufender Vertiefungen vorgesehen ist. Dann erhöht sich die Anzahl der aus der Holzwerkstoffplatte aufzuteilenden Paneele.

Die Vertiefungen weisen vorzugsweise eine Tiefe von mindestens 0,4 mm auf. Dann ist die Fase am Endprodukt gut sichtbar.

Vorzugsweise besteht auch die Dekorschicht aus einem harzgetränkten Dekorpapier, das insbesondere vorzugsweise ein Gewicht von 60 bis 160 g/m² besitzt.

Auch die Abdeckschicht besteht vorzugsweise aus einem harzgetränkten Overlaypapier.

Als besonders vorteilhaft hat sich herausgestellt, wenn als Kern eine HDF-Platte (High-density-fiberboard) verwendet wird.

Ein Fußbodenpaneel, das nach Aufteilung der Holzwerkstoffplatte entlang der Vertiefungen und ggf. weiterer spanabhebender Bearbeitungsschritte zur Kantenprofilierung erhalten wurde, zeichnet sich an den Seitenrändern der Dekorierung durch eine Fase aus, die in Richtung der Kantenprofilierung verläuft und auf eine Tiefe von mindestens 0,4 mm abgesenkt ist.

Mit Hilfe einer Zeichnung soll ein Ausführungsbeispiel der Erfindung näher beschrieben werden.

Es zeigen:

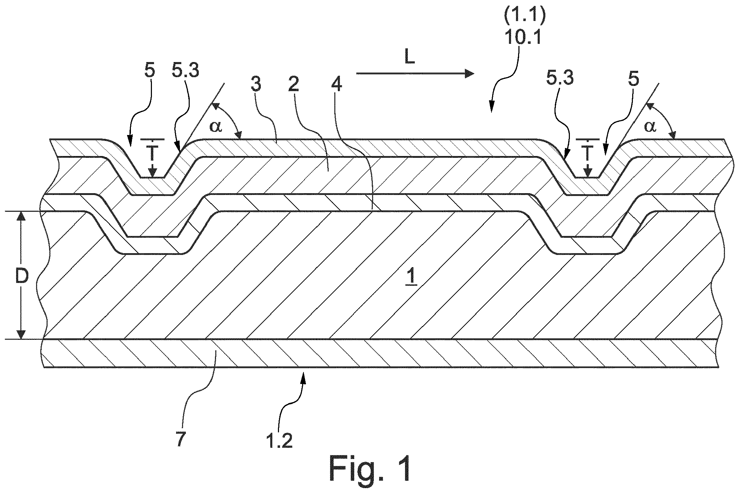

- Figur 1 -: einen Schnitt durch eine großformatige Holzwerkstoffplatte in Längsrichtung;

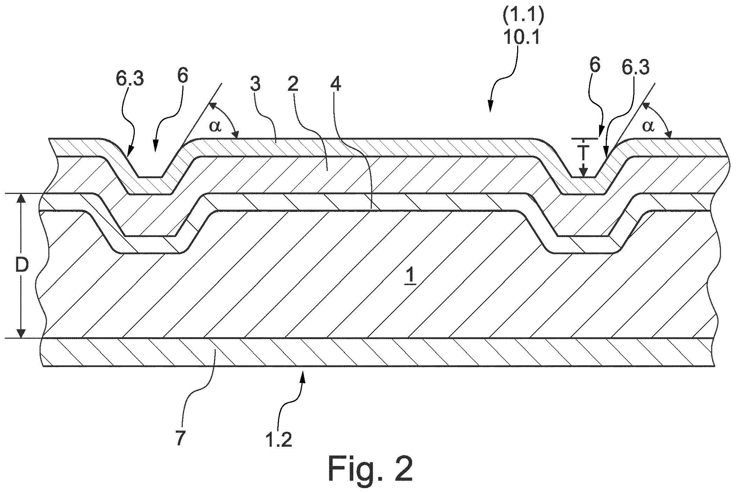

- Figur 2 -: einen Schnitt durch eine großformatige Holzwerkstoffplatte in Querrichtung;
- Figur 3 -: die Draufsicht auf eine großformatige Holzwerkstoffplatte mit in Längsrichtung und Querrichtung geprägten Vertiefungen;
- Figur 4 -: die vereinfachte Darstellung eines aus einer großformatigen Holzwerkstoffplatte aufgeteilten Paneels
- Figur 5 -: einen Schnitt durch eine großformatige Holzwerkstoffplatte in Querrichtung.

Eine HDF-Platte mit einer Dicke D von 7 mm bildet den Kern 1 einer großformatigen Holzwerkstoffplatte. Auf die Oberseite 1.1 des Kerns 1 werden ein Unterlagsbogen 4 aus mit einem Mischharz beschichteten Papier aufgelegt. Das Mischharz ist eine Mischung aus Phenolharz und Melaminharz. Das Mischungsverhältnis von Phenolharz zu Melaminharz beträgt zwei zu eins. Darauf wird eine Dekorschicht 2 und auf diese eine Abdeckschicht 3 aufgelegt. Die Unterseite 1.2 des Kerns 1 wird mit einem Gegenzug 7 versehen. Dieser Aufbau wird in einer Kurztaktpresse mit einem Druck von 60 kg/cm² und einer Temperatur von 200°C für 30 Sekunden verpresst. Um die in Querrichtung Q verlaufenden Vertiefungen 5 und die in Längsrichtung L verlaufenden Vertiefungen 6 in die Oberseite 10.1 einzuprägen, wird in der Kurztaktpresse ein Pressblech verwendet, auf dem wannenförmige Erhebungen als Stege aufgebracht sind. Die Breite der Stege beträgt etwa 2 cm, ihre Höhe 0,55 mm. Beim Verpressen drücken sich diese Stege durch die Abdeckschicht 3, die Dekorschicht 2 und den Unterlagsbogen 4 in den Kern 1 hinein und bilden im Querschnitt leicht V-förmige Vertiefungen 5, 6 aus. Die Seitenwände 5.3, 6.3 der Vertiefungen 5.6 verlaufen in von der Oberseite 10.1 ausgehend in die Tiefe T einem Winkel α von 20° bis 60°, vorzugsweise 45°. Je steiler umso besser.

Die Dekorschicht 2 wird durch ein harzimprägniertes Papier gebildet. Ebenso wird für die Abdeckschicht 3 ein harzimprägniertes Overlaypapier verwendet, in das zur Erhöhung der Abriebfestigkeit abriebfeste Partikel, insbesondere Korundpartikel eingemischt sein können. Das Gewicht des Unterlagsbogens beträgt 80 bis 260 g/m². Vorzugsweise maximal 160 g/m². Das Papier wird mit 60 bis 200 g/m² Mischharz beschichtet (imprägniert.

Es wurden Verpressungen mit Unterlagsbögen 4 mit reinem Melaminharz und mit dem Mischharz durchgeführt. Die Tiefe T der Vertiefungen (Strukturtiefe) lag zwischen 0,4 und 0,48 mm, wie der nachfolgenden Tabelle entnehmbar ist:

| Variante Prüfung | Regenerat 80g/m2 | Regenerat 80g/m² | NKP 160 g/m² |
|---|---|---|---|
| | Reinmelamin (100% HA) | (2x) Reinmelamin (100% HA) | Mischharz (P/M, 2:1) (80% HA) |
| Gesamtschichtdicke Aufbau in mm | 0,32 | 0,42 | 0,46 |
| Strukturtiefe in mm | 0.4 | 0,4 | 0.48 |
| Beurteilung Verpressung | Transparenzstörung | Microrisse in Strukturierung | i.O. |

Es wurden dabei mit einem Overlay- und einem Dekorimprägnat und verschiedenen Unterlagsbögen gearbeitet. Die Verpressungen wurden bei identischen Pressparametern durchgeführt. Wie zu erkennen ist, lässt sich mit einem mit reinem Melamin beschichteten Unterlagsbogen keine mängelfreie Oberfläche erzeugen. Auch wurde nur eine geringe Strukturtiefe erzielt. Selbst dann, wenn anstelle eines einzigen Unterlagsbogen zwei Unterlagsbögen verwendet wurden (mittlerer Versuch).

Die Unterlagsbögen 4 waren alle mit einem Phenol-Melaminharz imprägniert, wobei das Verhältnis Phenolharz zu Melaminharz 2:1 betrug. Die anderen Imprägnate (2, 3, 7) wurden unter Standardbedingungen imprägniert, was auch für die Harzaufträge usw. gilt. Das schließt natürlich nicht aus, die anderen Imprägnate (Dekorpapier 2, Overlay 3 und/oder Gegenzug 7 mit demselben Mischharz zu imprägnieren wie den oder die Unterlagsbögen 4. Die eingesetzten Overlays 3 sind für die Nutzungsklasse 23 der DIN EN 13329 vorgesehen.

Es wurden zur Absicherung der überraschenden Erkenntnis auch Verpressungen mit und ohne Unterlagsbögen 4 mit reinem Melaminharz und mit dem Mischharz durchgeführt. Die Tiefe T der Vertiefungen (Strukturtiefe) lag zwischen 0,32 und 0,41 mm.

Die nachfolgende Tabelle zeigt die Ergebnisse einer fertiggestellten Holzwerkstoffplatte mit einem Kern aus einer 7 mm dicken HDF-Platte und einem Gegenzug, ohne Unterlagsbogen im Vergleich zu drei anderen Holzwerkstoffplatten auch mit einem Kern aus einer 7 mm dicken HDF-Platte mit einem Gegenzug, mit Unterlagsbögen 4 mit Grammaturen von 80 g/m², 100 g/m² und 160 g/m². Bei dem Papiergewicht von 80 g/m² erfolgte eine Imprägnierung mit 140 g/m² Phenol-Melamin-Mischharz (2:1), bei dem Papiergewicht von 100 g/m² war der Unterlagsbogen 4 mit 75 g/m² Phenol-Melamin-Mischharz (2:1) imprägniert und bei dem Papiergewicht von 160 g/m² wurde der Unterlagsbogen 4 mit 120 g/m² Phenol-Melamin-Mischharz (2:1) imprägniert. Die Verpressungen erfolgten bei identischen Pressparametern. Die eingesetzten Overlay- und Dekorpapiere waren ebenfalls identisch.

| | Standard | Versuchsaufbau 1 | Versuchsaufbau 2 | Versuchsaufbau 3 |
|---|---|---|---|---|
| Aufbau | Overlay, AC4 Dekor | Overlay, AC4 Dekor Unterlagsbogen (80 g/m2)* | Overlay, AC4 Dekor Unterlagsbogen (100 g/m2)** | Overlay, AC4 Dekor Unterlagsbogen (160g/m2)*** |
| | HDF, 7 mm Gegenzug | HDF, 7 mm Gegenzug | HDF, 7 mm Gegenzug | HDF, 7 mm Gegenzug |
| Strukturtiefe in mm | 0,3 | 0,32 | 0,40 | 0,41 |
| Visuelle Beurteilung | Risse, Transparenzstörung | Leichte Transparenzstörung | Leichte Transparenzstörung | i.O. |
| Kugelfalltest (DIN EN 13329 ) Grosse Kugel (in mm ) | 500 | 500 | 750 | 750 |

| | | | | |
|---|---|---|---|---|
| *NKP Papiergewicht: 80g/m2, Endgewicht: 140g/m2, Beharzung: Mischharz Phenol/ Melamin (2:1) ** NKP Papiergewicht: 100g/m2, Endgewicht: 175g/m2, Beharzung: Mischharz Phenol/ Melamin (2:1) *** NKP Papiergewicht: 160g/m2, Endgewicht: 280g/m2, Beharzung: Mischharz Phenol/Melamin (2:1) | | | | |

Wie dieser Tabelle zu entnehmen ist, wird bei einem Unterlagsbogen 4 mit einer Grammatur von 80 g/m² eine Tiefe von 0,32 mm der Vertiefungen 5, 6 erreicht und bei der visuellen Beurteilung lassen sich noch leichte transparente Störungen erkennen, während bei einer herkömmlichen Platte nur eine Strukturtiefe von 0,3 mm erreichbar war und die visuelle Beurteilung Risse und Transparenzstörungen ergab.

Ab einer Grammatur von 100 g/m² für den Unterlagsbogen 4 wurde ein qualitativ einwandfreies Produkt erhalten. Es war eine Tiefe T von 0,40 mm für die Vertiefungen 5, 6 erreichbar und bei der Verwendung eines Unterlagsbogens 4 mit einer Grammatur von 160 g/m² wurden Vertiefungen 5, 6 mit einer Tiefe T von 0,41 mm erreicht und die visuelle Beurteilung ergab keine Beanstandungen.

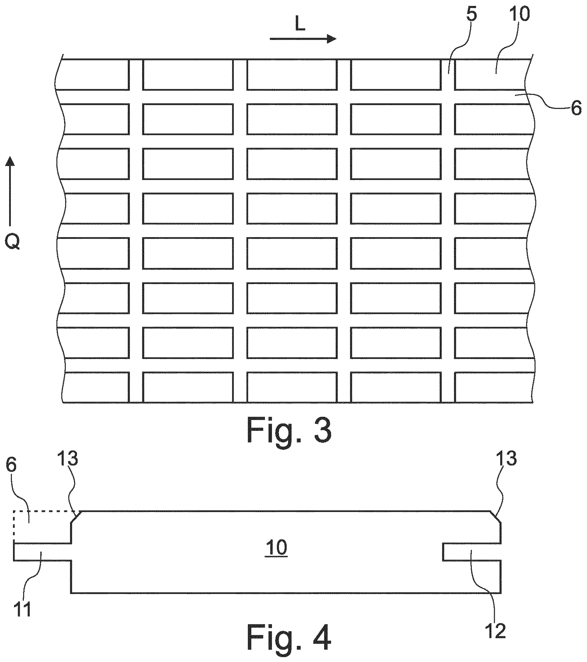

Als Unterlagsbögen 4 können Natronkraft- oder Recyclingpapiere verwendet werden. Auch wenn die Versuche mit einem Phenol-Melamin-Harz durchgeführt wurden, kann die Imprägnierung auch mit einem reinen Melaminharz erfolgen. Aus der in Figur 3 gezeigten beschichteten Holzwerkzeugplatte werden einzelne Paneele 10 ausgeschnitten, indem Sägeschnitte entlang der Vertiefungen 5, 6 ausgeführt werden. Das ausgeschnittene Profil wird an den Seitenkanten spanabhebend bearbeitet. So werden eine Feder 11 und eine hierzu korrespondierende Nut 12 an gegenüberliegenden Seitenkanten angearbeitet. Durch die eingeprägten Vertiefungen 5, 6 bildet sich von der Oberseite 10.1 ausgehend eine harzbeschichtete Fase 13 aus.

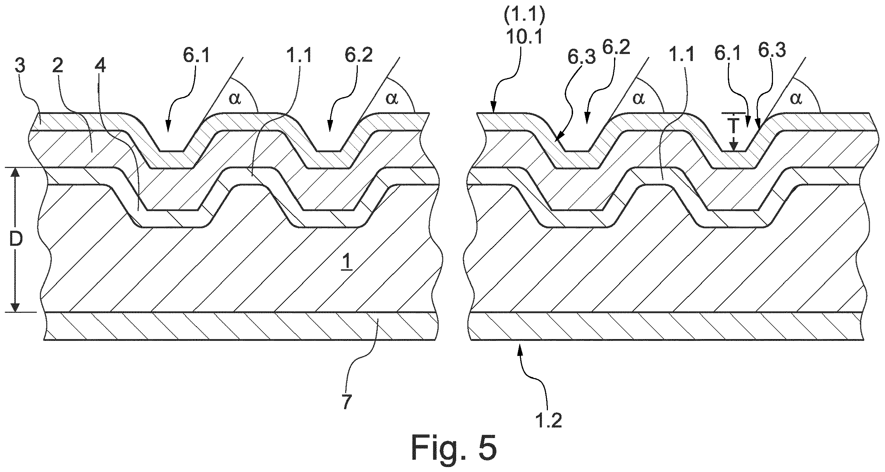

Eine alternative Ausführungsform der geprägten großformatigen Holzwerkstoffplatte zeigt Figur 5. Hier werden in die Oberseite 10.1 der großformatigen Holzwerkstoffplatte jeweils zwei dicht aneinander liegende Vertiefungen 6.1, 6.2 geprägt. Beim Aufteilen der großformatigen Holzwerkstoffplatte in einzelne Paneele 10 wird der Sägeschnitt entlang der sich zwischen den Vertiefungen 6.1, 6.2 ausbildende Steg 1.3 weggesägt und dann die Seitenkante profiliert. Nicht nur in Längsrichtung L, sondern auch in Querrichtung Q können die Vertiefungen jeweils paarweise dicht aneinander angrenzend ausgebildet werden. Die Anzahl der Vertiefungen 5, 6; 6.1, 6.2 bestimmt sich durch die Endgröße, die für die Paneele 10 gewünscht wird und das Format der großformatigen Holzwerkstoffplatte.

### Bezugszeichenliste

- 1: Kern
- 1.1: Oberseite
- 1.2: Unterseite
- 1.3: Steg
- 2: Dekorschicht
- 3: Overlay
- 4: Unterlagsbogen
- 5: Vertiefung
- 5.3: Seitenwand
- 6: Vertiefung
- 6.1: Vertiefung
- 6.2: Vertiefung
- 6.3: Seitenwand
- 7: Gegenzug
- 10: Paneel
- 10.1: Oberseite
- 11: Feder
- 13: Fase

- α: Winkel
- D: Dicke
- L: Längsrichtung
- Q: Querrichtung
- T: Tiefe

## Patentansprüche

1. Holzwerkstoffplatte mit einem Kern (1), mindestens einer auf einer Oberseite (1.1) über dem Kern (1) liegenden Dekorschicht (2), unter der mindestens ein Unterlagsbogen (4) aus mit einem Harz beschichtetem Papier vorgesehen ist, mindestens einer über der Dekorschicht (2) liegenden Abdeckschicht (3) und mindestens einer in die Oberseite (1.1) eingeprägten Vertiefung (5), **dadurch gekennzeichnet, dass** das Harz ein Mischharz aus Phenolharz und Melaminharz ist.

2. Holzwerkstoffplatte nach Anspruch 1, **dadurch gekennzeichnet, dass** das Verhältnis Phenolharz zu Melaminharz 2:1 ist.

3. Holzwerkstoffplatte nach Anspruch 1 oder 2, **dadurch gekennzeichnet, dass** das Gewicht des Papiers 80 bis 260 g/m² beträgt und vorzugsweise die Beschichtung mit Harz 60 bis 200 g/m² beträgt.

4. Holzwerkstoffplatte nach Anspruch 1 oder 2, **dadurch gekennzeichnet, dass** die Beschichtung mit Harz mindestens 60 g/m², vorzugsweise mindestens 75 g/m², besonders bevorzugt mindestens 120 g/m² beträgt.

5. Holzwerkstoffplatte nach einem der vorstehenden Ansprüche, **dadurch gekennzeichnet, dass** mindestens eine weitere im Winkel von 90° quer zu der Vertiefung (5) eingeprägten Vertiefung (6) vorgesehen ist.

6. Holzwerkstoffplatte nach Anspruch 5, **dadurch gekennzeichnet, dass** eine Mehrzahl jeweils zueinander parallel verlaufender Vertiefungen (5, 6) vorgesehen sind.

7. Holzwerkstoffplatte nach einem der vorstehenden Ansprüche, **dadurch gekennzeichnet, dass** das Harz ein reines Melaminharz ist.

8. Holzwerkstoffplatte nach einem der vorstehenden Ansprüche, **dadurch gekennzeichnet, dass** die Vertiefungen (5, 6) eine Tiefe von mindestens 0,4 mm aufweisen.

9. Holzwerkstoffplatte nach einem der vorstehenden Ansprüche, **dadurch gekennzeichnet, dass** die Dekorschicht (2) aus einem harzgetränkten Dekorpapier besteht.

10. Holzwerkstoffplatte nach Anspruch 9, **dadurch gekennzeichnet, dass** das Gewicht des Dekorpapiers 60 bis 160 g/m² beträgt.

11. Holzwerkstoffplatte nach einem der vorstehenden Ansprüche, **dadurch gekennzeichnet, dass** die Abdeckschicht (3) aus einem harzgetränkten Overlaypapier besteht.

12. Holzwerkstoffplatte nach einem der vorstehenden Ansprüche, **dadurch gekennzeichnet, dass** die Seitenwände (5.3, 6.3) der Vertiefungen (5, 6) ausgehend von der Oberseite (1.1) in die Tiefe (T) in einem Winkel α von 20°-60°, vorzugsweise 45° verlaufen.

13. Holzwerkstoffplatte nach einem der vorstehenden Ansprüche, **dadurch gekennzeichnet, dass** der Kern (1) eine HDF-Platte ist.

14. Fußbodenpaneel, das nach Aufteilung der Holzwerkstoffplatte nach einem der vorstehenden Ansprüche entlang der Vertiefungen (5, 6) und gegebenenfalls weiterer spanabhebender Bearbeitungsschritte zur Kantenprofilierung erhalten wurde.
